# EUROPÄISCHE PATENTSCHRIFT

(11) **EP 0 730 425 B1**
(45) Veröffentlichungstag und Bekanntmachung des Hinweises auf die Patenterteilung: **19.05.1999**
(21) Anmeldenummer: 95932719.8
(22) Anmeldetag: 12.09.1995
(51) Int. Cl.: A47J 31/06

(54) **BRÜHKOPF FÜR PORTIONSKAPSELN EINER ESPRESSOMASCHINE**
BREWING HEAD FOR COFFEE PORTION CAPSULES IN AN ESPRESSO MACHINE
TETE D'INFUSION DE DOSES DE POUDRE A CAFE EN SACHETS POUR MACHINES A CAFE EXPRESS

(30) Priorität: 22.09.1994 DE 9415374 U
(43) Veröffentlichungstag der Anmeldung: 11.09.1996
(73) Patentinhaber: Eugster/Frismag AG, 8590 Romanshorn (CH)
(72) Erfinder: FISCHER, Daniel, CH-8590 Romanshorn (CH)
(74) Vertreter: Schubert, Siegmar, Dipl.-Ing.
(86) Internationale Anmeldenummer: EP9503581
(87) Internationale Veröffentlichungsnummer: WO9608990

(56) Entgegenhaltungen:
- EP-A- 0 102 125
- EP-A- 0 465 877
- EP-A- 0 521 397
- WO-A-94/02059
- FR-A- 1 410 288
- US-A- 3 470 812
- US-A- 3 824 913

## Beschreibung

Die Erfindung betrifft einen Brühkopf einer mit Portionskapseln zu beschickenden Espressomaschine mit einem Brühkopf-Unterteil und einem relativ dazu schwenkbaren Brühkopf-Oberteil, die zwischen sich eine Aufnahme für eine der Portionskapseln ausbilden, wobei im Oberteil ein Heißwasserkanal ausgebildet ist, der sich zu mehreren Hohlnadeln verzweigt, mit denen die die Oberseite der Kapsel bildende Folie durchstoßen werden kann, so daß das Heißwasser durch das Innere der Kapsel zu deren Unterseite strömen kann, wo das Heißwasser mit gelösten Kaffeeanteilen die Kapsel über Öffnungen verläßt, die von nach innen weisenden Spitzen einer Pyramidenplatte in die Folie gestoßen werden, sobald der Wasserdruck die Reißfestigkeit der Folie übersteigt, und wobei anschließend das Heißwasser mit gelösten Kaffeeanteilen durch Ablauflöcher in der Pyramidenplatte und über einen Sammelkanal aus dem Brühkopf austritt.

In der WO-A-9 402 059 wird eine derartige Vorrichtung zur Zubereitung von Heißgetränken, insbesondere von Espressokaffee, beschrieben, bei der das Kaffeemehl sich in einer aus zwei Folienkalotten gebildeten Kapsel befindet, die druckdicht miteinander verschweißt sind.

Die Kapsel wird in eine spezielle Vorrichtung, einen zweiteiligen, aufklappbaren Brühkopf eingelegt. Das aufklappbare Oberteil des Brühkopfes trägt auf seiner Innenseite eine Anzahl von Nadelspitzen, die mit Bohrungen und seitlichen Austrittslöchern zur Wasserzuführung versehen sind. Das Bodenteil des Brühkopfes ist auf seiner Innenseite mit einer Anzahl von Pyramidenstümpfen ausgestattet, die durch Kanäle, die mit das Bodenteil durchdringenden Ablaufbohrungen versehen sind, voneinander getrennt sind.

Beim Schließen des Brühkopfes durchstoßen die Nadelspitzen die obere Folienkalotte der Kapsel. Gleichzeitig drückt das Oberteil des Brühkopfes die Kapsel auf die Pyramidenstümpfe.

Durch das Schließen des Brühkopfes wird außerdem der Schweißkragen der beiden Folienkalotten so zwischen dem Bodenteil und dem Oberteil eingeklemmt, daß das über die Nadeln in die Kapsel eintretende Brühwasser nur durch die Kapsel und nicht um sie herum fließen kann.

Dadurch drückt das unter hohem Druck (10 - 15 bar) stehende Wasser die Unterseite der Kapsel fest in die Pyramidenstumpf-Geometrie. Bei Überschreiten der Reißfestigkeit der Folie reißt die Kapsel an den Kanten der Pyramidenstümpfe auf, und das Brühwasser mit den gelösten Kaffeeanteilen fließt über die Bodenkanäle und die Ablauflöcher in das unter dem Brühkopf befindliche Auffanggefäß.

Die Zeit zwischen dem Eintritt des Brühwassers und dem Aufreißen der Kapsel ist für die Qualität des Espressos und vor allem für die Bildung der espressotypischen Crema bestimmend und damit wesentlicher Inhalt der vorbeschriebenen Erfindung.

Diese Vorrichtung hat die folgenden Vorteile:
1. Das in der Kapsel portionsweise genau dosierte Kaffeemehl kann über lange Zeit aromadicht gelagert bzw. zur Verfügung gehalten werden.
2. Das Verfahren garantiert ein gleichmäßig gutes Brühergebnis und die typische Crema.
3. Die Entsorgung der gebrauchten Kapsel ist unproblematisch und sauber.

Diese Vorrichtung hat in der vorgestellten Ausführungsform aber noch verschiedene Nachteile:
1. Das aufklappbare Oberteil des Brühkopfes ist, bedingt durch seine bewegliche Aufhängung, thermisch nicht mit dem Heißwassergenerator verbunden, was zur Folge hat, daß es während des Brühvorganges vom Brühwasser aufgeheizt wird, was zu einer Absenkung der Wassertemperatur, d. h. der Brühtemperatur und damit zu einer Qualitätsminderung des Aufgusses führt.
2. Beim Öffnen des Brühkopfes nach einer Espressozubereitung bleibt die gebrauchte Kapsel an den Nadeln des aufgeklappten Brühkopf-Oberteils hängen und erschwert die von Hand zu bewerkstelligende Entsorgung.

Mit Hilfe der nachfolgenden Vorschläge sollen diese Nachteile vermieden werden.

Insbesondere liegt der Erfindung somit die Aufgabe zugrunde, Mittel vorzusehen, mit denen die verbrauchte Portionskapsel aus dem Brühkopf ausgestoßen werden kann und ggfs. entsorgt wird, sowie durch geeignete Maßnahmen dafür zu sorgen, daß schon der mit der ersten Portionskapsel gebrühte Espresso, d. h. wenn sich der Brühkopf und insbesondere das Oberteil auf Zimmertemperatur befindet, eine einwandfreie Qualität hat.

Zur Lösung der erwähnten Aufgabe ist die Erfindung dadurch gekennzeichnet, daß im Brühkopf-Oberteil ein Ausstoßer vorgesehen ist, der die verbrauchte Kapsel aus dem Nadelverband ausstößt.

Der Ausstoßer wird direkt oder indirekt von Hand betätigt.

Durch die Merkmale von Anspruch 2 wird eine Anordnung beschrieben, mit der erreicht wird, daß mit dem Aufschwenken des Oberteils der Ausstoßer mittels einer Feder die verbrauchte Portionskapsel selbsttätig aus dem Oberteil ausstößt, ohne daß hierzu weitere Handhabungen nötig wären.

Bevorzugt wird es, wenn der am Oberteil schwenkbar angebrachte Hebel in der Schließlage die beiden Teile des Brühkopfs miteinander verriegelt.

Es gibt mehrere Weiterbildungen. Nach Anspruch 7 wird es insoweit bevorzugt, wenn alle mit dem Heißwasser in Verbindung kommenden Teile des Brühkopf-Oberteils und/oder des Unterteils aus einem schlecht wärmeleitenden Material bestehen. Dadurch geht praktisch die gesamte Wärmeenergie des zuströmenden Heißwassers in die Kapsel und sorgt dort für eine einwandfreie Qualität des gebrühten Kaffees oder Espressos.

Eine zweite Weiterbildung ist dadurch gekennzeichnet, daß alle mit dem Heißwasser in Verbindung kommenden Teile des Oberteils und/oder des Unterteils eine möglichst geringe Wärmekapazität haben und von wärmeleitenden Konstruktionselementen des Oberteils bzw. des Unterteils mittels einer Isolierung thermisch getrennt sind. Die Teile mit der geringen Wärmekapazität nehmen somit lediglich sehr wenig Wärmeenergie aus dem Heißwasser auf.

Eine dritte Weiterbildung ist dadurch gekennzeichnet, daß das Brühkopf-Oberteil und/oder das Unterteil mit einer gesonderten Heizung versehen sind, die vorzugsweise als Elektroheizung ausgebildet ist. Dadurch kann man das Oberteil und/oder das Unterteil auf die gewünschte Temperatur vorheizen.

Die Aufgabe zielt bekanntlich darauf, die verbrauchte Portionskapsel selbsttätig mit dem Hochschwenken des Oberteils zu entsorgen, d.h. einem geeigneten Abfallbehälter oder dergleichen zuzuführen, ohne daß man die verbrauchte Portionskapsel hierzu mit der Hand berühren muß. Bei dem eingangs erwähnten Stand der Technik war dies bekanntlich nicht gegeben; dort muß man die verbrauchte und in aller Regel noch heiße Portionskapsel von Hand aus dem Nadelkissen herausheben und entsorgen.

Patentanspruch 4 schlägt bevorzugte Maßnahmen vor, über die die verbrauchte Portionskapsel gleichzeitig mit dem Hochschwenken des Oberteils ebenfalls hochgeschwenkt wird in eine Schräglage derart, daß die Portionskapsel dann aus ihrem Träger, vorzugsweise aus einer Auswerferbrille, nach unten in einen geeigneten Abfallbehälter fällt. Hierzu muß man also nicht mehr die verbrauchte Portionskapsel mit der Hand berühren, sondern dies geht selbsttätig zusammen mit dem Hochschwenken des oberen Brühkopf-Teils, so daß anschließend eine frische Portionskapsel in den Träger eingelegt werden kann und die Anordnung kann dann wieder in ihre Betriebsstellung herabgeschwenkt werden.

In dieser Betriebsstellung soll das Oberteil mit dem Unterteil verriegelt werden und hierfür schlägt Patentanspruch 5 geeignete und bevorzugte Maßnahmen vor.

Aus ergonomischen Gründen wird es bevorzugt, wenn nach Anspruch 6 die Verriegelungsklinke relativ zum Verriegelungshebel schwenkbar ist, und zwar abermals vorzugsweise nach einem vorhergehenden Totgang.

Die Erfindung wird im folgenden anhand von Ausführungsbeispielen näher erläutert, aus denen sich weitere wichtige Merkmale ergeben. Es zeigt:
- **Fig. 1**: einen Schnitt durch die wesentlichen Teile eines erfindungsgemäßen Brühkopfes, die hier aus einem schlecht wärmeleitenden Material bestehen;
- **Fig. 2**: einen Schnitt entsprechend Figur 1, bei dem die mit dem Brühwasser in Verbindung kommenden Teile durch eine geringe Wärmekapazität gekennzeichnet sind;
- **Fig. 3**: ebenfalls einen Schnitt durch den Brühkopf, wobei im Oberteil eine elektrische Heizung vorgesehen ist;
- **Fig. 4**: einen Teilschnitt durch den Brühkopf mit einer Auswerferanordnung, einer Ausstoßeranordnung und einer Verriegelungsanordnung in geschlossenem Zustand;
- **Fig. 5**: die geöffnete Brüheinheit;
- **Fig. 6**: eine Draufsicht auf die Brüheinheit.

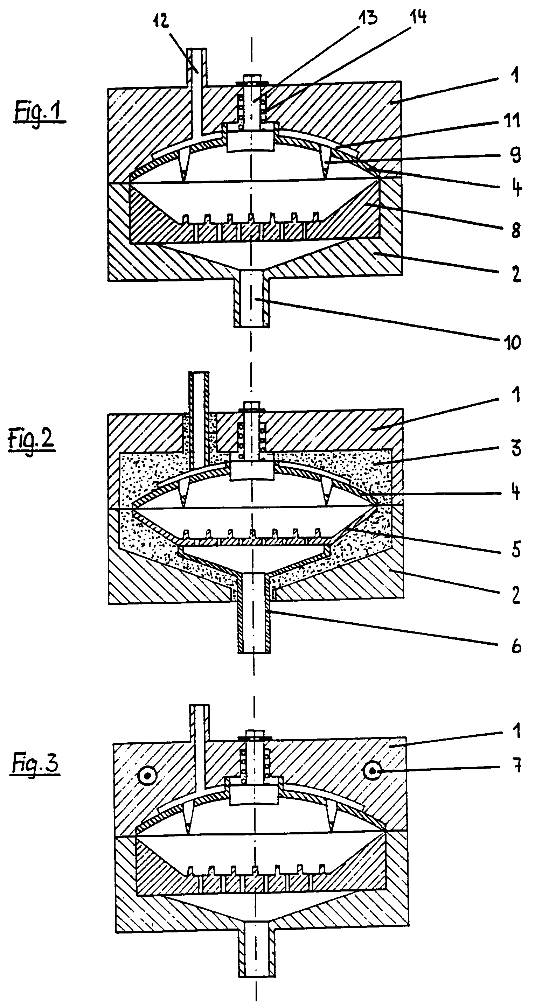

In Figur 1 bestehen alle mit dem Brühwasser in Verbindung kommenden Teile des Brühkopf-Oberteils 1 und die Verbindungsleitung vom Heißwassergenerator zum Brühkopf aus einem schlecht wärmeleitenden Material, zum Beispiel aus geeignetem Kunststoff, aus Glaskeramik oder Keramik.

Das gleiche gilt für das Brühkopf-Unterteil 2 und die darin angeordnete Pyramidenplatte 8, sofern das Unterteil oder Bodenteil nicht mit dem Heißwassergenerator oder seiner Heizung thermisch verbunden ist.

Nach Figur 2 sind alle mit dem Brühwasser in Verbindung kommenden Teile 4 des Brühkopf-Oberteils konstruktiv so ausgelegt, daß sie nur eine geringe Wärmekapazität haben. Sie sind gegenüber wärmeleitenden Konstruktionselementen des Oberteils mittels einer Isolierung 3 thermisch getrennt.

Das gleiche gilt für das Brühkopf-Unterteil 2, die Pyramidenplatte 5 und den Auslaufbereich 6 des Unterteils, sofern das Unterteil nicht mit dem Heißwassergenerator oder mit seiner Heizung thermisch verbunden ist.

Nach Figur 3 ist das aufklappbare Oberteil 1 des Brühkopfes mit einer eigenen, vorzugsweise elektrischen Nachheizung 7 ausgestattet, die das Oberteil vor dem Brühvorgang auf die Brühtemperatur aufheizt. Das gleiche gilt für das Unterteil 2 mit der Pyramidenplatte, sofern es nicht mit dem Heißwassergenerator oder seiner Heizung thermisch verbunden ist.

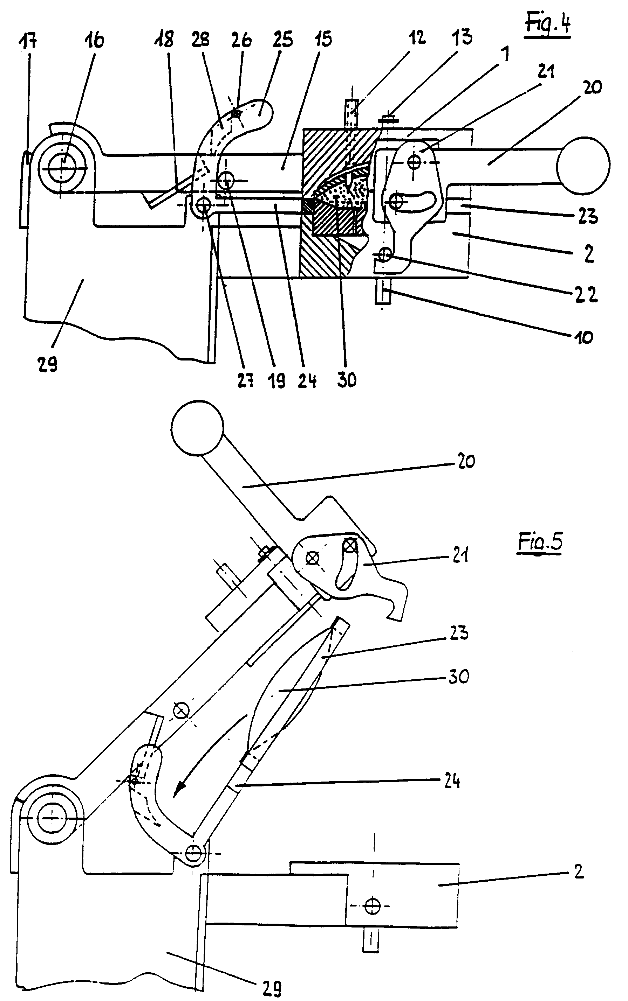

Figur 4 zeigt, daß das die Nadeln 9 tragende Brühkopf-Oberteil 1 mit einem Ausstoßer 13 versehen ist, der beim Öffnen des Brühkopfes mittels einer Feder 14 die gebrauchte Kapsel 30 aus dem Nadelverband 31 ausstößt.

Anstelle der Zwangssteuerung kann auch ein handbetätigter Ausstoßer vorgesehen sein.

Im folgenden wird die Beschickung des Brühkopfes anhand der Figuren 4 - 6 erläutert.

Zur Beschickung des Brühkopfes mit der Kapsel 30 wird der Brühkopf mittels eines Verriegelungshebels 20 und eines Schwenkarmes 15 geöffnet, bis ein Anschlag 17 am Schwenkarmlager 16 den Hub begrenzt.

Bei dieser Schwenkbewegung wird mittels eines Hubbolzens 19 am Schwenkarm 15 und den zur Auswerferanordnung (bestehend aus Auswerferbrille 23, Auswerferarm 24 und Auswerferflügel 25) gehörenden Flügeln 25 die Auswerferanordnung mit angehoben. Etwa in halber Hubhöhe laufen die Hubbolzen 19 aus den Kurven der Flügel 25 und Flügelmitnahmebolzen 26 laufen auf Mitnahmewinkel 18 des Schwenkarmes 15 auf. Damit wird die Auswerferanordnung bis zum Erreichen der Hubbegrenzung mit hochgeschwenkt.

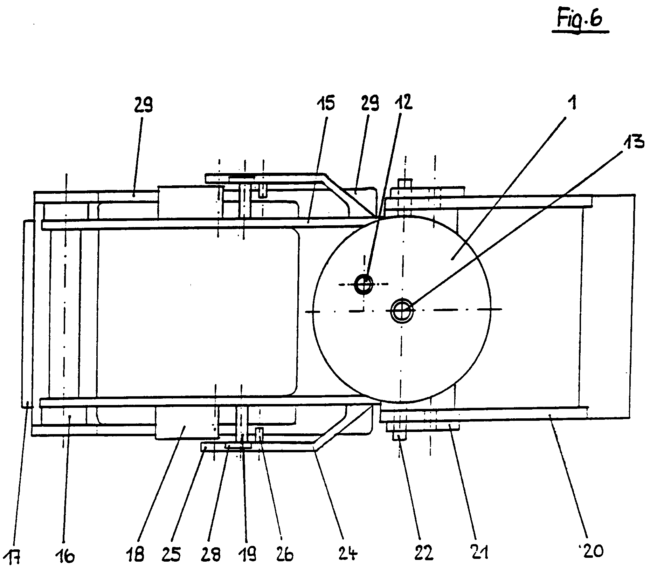

Beim Erreichen der Hubbegrenzung laufen die Flügelmitnahmebolzen 26 von den Mitnahmewinkeln 18 des Schwenkarmes 15 (Fig. 5) und die Auswerferanordnung fällt automatisch in ihre Ausgangsposition nach Figur 4.

Nach Einlegen der Kapsel 30 wird mittels des Verriegelungshebels 20 und des Schwenkarmes 15 der Brühkopf geschlossen und es werden durch Kippen des Verriegelungshebels 20 mittels einer Verriegelungsklinke 21 und eines Verriegelungsbolzens 22 das Brühkopf-Oberteil 1 und das Brühkopf-Unterteil 2 miteinander verriegelt.

Beim Abwärtsschwenken werden die aus federndem Material bestehenden Flügel 25 von den von oben kommenden, in Spreiznuten 28 der Flügel 25 einlaufenden Hubbolzen 19 des Schwenkarmes 15 seitlich ausgelenkt, so daß der Schwenkarm 15 in seine Ausgangsposition nach Figur 4 gelangen kann und die Hubbolzen 19 wieder unterhalb der Flügel 25 liegen. Danach erfolgt der oben beschriebene Brühvorgang.

Zur Entsorgung des Brühkopfes wird die Verriegelung durch Aufwärtskippen des Verriegelungshebels 20 gelöst. Anschließend wird der Brühkopf wie beim Beschickungsvorgang geöffnet. Diesmal liegt in der Auswerferbrille 23 die verbrauchte Kapsel 30.

Beim Erreichen der Hubbegrenzung 17 fällt die Kapsel automatisch durch die Schräglage der Auswerferanordnung und durch den Anschlagimpuls beim Erreichen der Hubbegrenzung aus der Auswerferbrille 23 nach unten in ein nicht dargestelltes Entsorgungsgefäß. Anschließend verbleibt der Brühkopf geöffnet oder er wird wie beschrieben geschlossen.

### Bezugszeichenliste

- 1: = Brühkopf-Oberteil
- 2: = Brühkopf-Unterteil
- 3: = Thermische Isolierung
- 4: = Wassernadelträger
- 5: = Pyramidenplatte geringer Wärmekapazität
- 6: = Kaffeeauslauf geringer Wärmekapazität
- 7: = Elektrische Heizung
- 8: = Pyramidenplatte aus schlecht wärmeleitendem Material
- 9: = Wassernadel
- 10: = Kaffeeauslauf
- 11: = Wasserkanal
- 12: = Wassereinlauf
- 13: = Ausstoßer
- 14: = Ausstoßerfeder
- 15: = Schwenkarm
- 16: = Schwenkarmlager
- 17: = Schwenkarm-Hubbebrenzer
- 18: = Mitnahmewinkel
- 19: = Hubbolzen
- 20: = Verriegelungshebel
- 21: = Verriegelungsklinke
- 22: = Verriegelungsbolzen
- 23: = Auswerferbrille
- 24: = Auswerferarm
- 25: = Auswerferflügel
- 26: = Auswerferdrehlager
- 27: = Flügelmitnahmebolzen
- 28: = Flügelspreizernuten
- 29: = Gehäuseträger
- 30: = Kapsel

## Patentansprüche

1. Brühkopf einer mit Portionskapseln (30) zu beschickenden Espressomaschine, mit einem Brühkopf-Unterteil (2) und einem relativ dazu schwenkbaren Brühkopf-Oberteil (1), die zwischen sich eine Aufnahme für eine der Portionskapseln (30) ausbilden, wobei im Oberteil (1) ein Heißwasserkanal (12) ausgebildet ist, der sich zu mehreren Hohlnadeln (9) verzweigt, mit denen die die Oberseite der Kapsel (30) bildende Folie durchstoßen werdend kann, so daß das Heißwasser durch das Innere der Kapsel (30) zu deren Unterseite strömen kann, wo das Heißwasser mit gelösten Kaffeeanteilen die Kapsel (30) über Öffnungen verläßt, die von nach innen weisenden Spitzen einer Pyramidenplatte (8) in die Folie gestoßen werden, sobald der Wasserdruck die Reißfestigkeit der Folie übersteigt, und wobei anschießend das Heißwasser mit gelösten Kaffeeanteilen durch Ablauflocher in der Pyramidenplatte (8) und über einen Sammelkanal (10) aus dem Brühkopf austritt,
**dadurch gekennzeichnet,**
daß im Brühkopf-Oberteil (1) ein Ausstoßer (13) vorgesehen ist, der die verbrauchte Kapsel (30) aus dem Nadelverband ausstößt.

2. Brühkopf nach Anspruch 1,
**dadurch gekennzeichnet,**
daß eine Feder (14) im Brühkopf-Oberteil (1) vorgesehen ist, die beim Öffnen des Brühkopfes den im Brühkopf-Oberteil (1) vorgesehenen Ausstoßer (13) betätigt.

3. Brühkopf nach Anspruch 1 oder 2,
**dadurch gekennzeichnet,**
daß ein am schwenkbaren Oberteil (1) angebrachter Hebel (20) in der Schließlage die beiden Teile (1,2) des Brühkopfes miteinander verriegelt.

4. Brühkopf nach einem der Ansprüche 1 - 3, wobei das Oberteil (1) an einem Schwenkarm (15) befestigt ist,
**dadurch gekennzeichnet,**
daß der Schwenkarm (15) einen Mitnehmer, insbesondere einem Hubbolzen (19), trägt, über den beim Hochschwenken des Schwenkarmes (15) eine ebenfalls schwenkbar am Gehäuse des Brühkopfes angebrachte Auswerferanordnung insbesondere bestehend aus Auswerferbrille (23), Auswerferarm (24), und Auswerferflügel (25) hochgeschwenkt wird, so daß eine in einer Auswerferbrille (23) der Auswerferanordnung liegende Portionskapsel (30) aus der Auswerferbrille (23) nach unten in ein Entsorgungsgefäß fallen kann.

5. Brühkopf nach Anspruch 4,
**dadurch gekennzeichnet,**
daß zum Verriegeln der beiden Teile (1,2) des Brühkopfes in der Schließlage am Schwenkarm (15) ein Verriegelungshebel (20) mit einer Verriegelungsklinke (21) vorgesehen ist.

6. Brühkopf nach Anspruch 5,
**dadurch gekennzeichnet,**
daß die Verriegelungsklinke (21) relativ zum Verriegelungshebel (20) schwenkbar ist.

7. Brühkopf nach einem der Ansprüche 1 - 6,
**dadurch gekennzeichnet,**
daß alle mit dem Heißwasser in Verbindung kommenden Teile des Brühkopf-Oberteils (1) und/oder des Unterteils (2) aus einem schlecht wärmeleitenden Material bestehen.

8. Brühkopf nach einem der Ansprüche 1 - 7,
**dadurch gekennzeichnet,**
daß alle mit dem Heißwasser in Verbindung kommenden Teile des Oberteils (1) und/oder des Unterteils (2) eine möglichst geringe Wärmekapazität haben und von wärmeleitenden Konstruktionselementen mittels einer Isolierung (3) thermisch getrennt sind.

9. Brühkopf nach einem der Ansprüche 1 - 8,
**dadurch gekennzeichnet,**
daß das Brühkopf-Oberteil (1) und/oder das Unterteil (2) mit einer gesonderten Heizung (7) versehen sind.

## Claims

1. Brewing head of an espresso machine which has to be charged with apportionment capsules (30), having a brewing head lower part (2) and, pivotable relative to it, a brewing head upper part (1) which, between them, form a receptacle for one of the apportionment capsules (30), and having a hot water duct (12) configured in the upper part (1), which hot water duct (12) branches to a plurality of hollow needles (9) by means of which the foil forming the upper surface of the capsule (30) can be punched through so that the hot water can flow through the inside of the capsule (30) to its lower surface where the hot water, together with dissolved coffee constituents, leaves the capsule (30) via openings which are punched in the foil by inwardly directed points of a pyramid plate (8) as soon as the water pressure exceeds the tear strength of the foil, the hot water with dissolved coffee constituents subsequently emerging from the brewing head through drain holes in the pyramid plate (8) and via a collecting duct (10), characterised in that an ejector (13), which ejects the used capsule (30) from the needle composite, is provided in the brewing head upper part (1).

2. Brewing head according to Claim 1, characterised in that a spring (14) is provided in the brewing head upper part (1), which spring, when the brewing head is opened, actuates the ejector (13) provided in the brewing head upper part (1).

3. Brewing head according to Claim 1 or 2, characterised in that a lever (20) attached to the pivotable upper part (1) locks the two parts (1, 2) of the brewing head together in the closed position.

4. Brewing head according to one of Claims 1 to 3, whose upper part (1) is fastened to a pivoting arm (15), characterised in that the pivoting arm (15) carries a driving feature, in particular a lifting pin (19), by means of which an ejector arrangement, likewise pivotably attached to the housing of the brewing head and, in particular, consisting of an ejector circumferential surround (23), an ejector arm (24) and an ejector wing (25), is pivoted up during the pivoting up of the pivoting arm (15) so that an apportionment capsule (30) located in a circumferential surround (23) of the ejector arrangement can fall downwards out of the ejector circumferential surround (23) into a disposal vessel.

5. Brewing head according to Claim 4, characterised in that a locking lever (20) with a locking catch (21) is provided on the pivoting arm (15) to lock the two parts (1, 2) of the brewing head in the closed position.

6. Brewing head according to Claim 5, characterised in that the locking catch (21) can be pivoted relative to the locking lever (20).

7. Brewing head according to one of Claims 1 to 6, characterised in that all the parts of the brewing head upper part (1) and/or of the lower part (2) coming into contact with the hot water consist of a low thermal conductivity material.

8. Brewing head according to one of Claims 1 to 7, characterised in that all the parts of the upper part (1) and/or of the lower part (2) coming into contact with the hot water have, as far as possible, a low thermal capacity and are thermally separated from thermally conducting structural elements by means of an insulation (3).

9. Brewing head according to one of Claims 1 to 8, characterised in that the brewing head upper part (1) and/or the lower part (2) are provided with a separate heating system (7).

## Revendications

1. Tête d'infusion d'une machine à café express à alimenter avec des capsules-doses (30), comprenant une partie inférieure (2) de tête d'infusion et, pouvant pivoter par rapport à celle-ci, une partie supérieure (1) de tête d infusion, qui foiment entre elles un logement de réception pour l'une des capsules-doses (30), un canal d'eau chaude (12) étant réalisé dans la partie supérieure (1) et se ramifiant en plusieurs aiguilles creuses (9) à l'aide desquelles la membrane définissant la face supérieure de la capsule (30) peut être transpercée, afin que l'eau chaude puisse s'écouler à travers l'intérieur de la capsule (30) jusqu'à la face inférieure de celle-ci où l'eau chaude, avec des portions de café dissoutes, quitte la capsule (30) par des ouvertures qui sont percées dans la membrane par des pointes, dirigées vers l'intérieur, d'une plaque pyramidale (8), dès que la pression d'eau surmonte la résistance à la rupture de la membrane, et l'eau chaude avec les portions de café dissoutes sortant ensuite de la tête d'infusion à travers des orifices d'écoulement ménagés dans la plaque pyramidale (8) et par un canal collecteur (10), caractérisée en ce que, dans la partie supérieure (1) de tête d'infusion, est prévu un élément d'expulsion (13) qui expulse la capsule (30) utilisée, hors de l'ensemble à aiguilles.

2. Tête d'infusion selon la revendication 1, caractérisée en ce que, dans la partie supérieure (1) de tête d'infusion, est prévu un ressort (14) qui, lors de l'ouverture de la tête d'infusion, actionne l'élément d'expulsion (13) prévu dans la partie supérieure (1) de tête d'infusion.

3. Tête d'infusion selon la revendication 1 ou 2, caractérisée en ce qu'un levier (20), monté sur la partie supérieure (1) pivotante, verrouille l'une sur l'autre les deux parties (1, 2) de la tête d'infusion, dans la position de fermeture.

4. Tête d'infusion selon l'une des revendications 1 à 3, dont la partie supérieure (1) est fixée à un bras pivotant (15), caractérisée en ce que le bras pivotant (15) porte un entraîneur, notamment un doigt de soulèvement (19) par l'intermédiaire duquel, lors du pivotement vers le haut du bras pivotant (15), une structure d'éjection, également montée de manière pivotante sur le bâti de la tête d'infusion et notamment constituée d'une lunette d'éjection (23), d'un bras d'éjection (24) et d'une ailette d'éjection (25), est amenée à pivoter vers le haut afin qu'une capsule-dose (30) se trouvant dans une lunette d'éjection (23) de la structure d'éjection puisse tomber vers le bas, de la lunette d'éjection (23) dans un récipient d'élimination des déchets.

5. Tête d'infusion selon la revendication 4, caractérisée en ce que, pour le verrouillage des deux parties (1, 2) de la tête d'infusion dans la position de fermeture, il est prévu, sur le bras pivotant, un levier de verrouillage (20) comportant un cliquet de verrouillage (21).

6. Tête d'infusion selon la revendication 5, caractérisée en ce que le cliquet de verrouillage (21) peut pivoter par rapport au levier de verrouillage (20).

7. Tête d'infusion selon 'une des revendications 1 à 6, caractérisée en ce que tous les éléments de la partie supérieure (1) de tête d'infusion et/ou de la partie inférieure (2), qui viennent en contact avec l'eau chaude, sont constitués d'un matériau mauvais conducteur de la chaleur.

8. Tête d'infusion selon l'une des revendications 1 à 7, caractérisée en ce que tous les éléments de la partie supérieure (1) et/ou de la partie inférieure (2), qui viennent en contact avec l'eau chaude, ont une capacité calorifique la plus faible possible et sont isolés thermiquement d'éléments de construction conduisant la chaleur, par une isolation (3).

9. Tête d'infusion selon l'une des revendications 1 à 8, caractérisée en ce que la partie supérieure (1) de tête d'infusion et/ou la partie inférieure (2) sont dotées d'un chauffage séparé (7).
